(19) Europäisches Patentamt
European Patent Office
Office européen des brevets

(11) **EP 1 435 672 A1**

(12) **EUROPÄISCHE PATENTANMELDUNG**

(43) Veröffentlichungstag:
07.07.2004 Patentblatt 2004/28

(51) Int Cl.⁷: **H01M 8/10**, H01M 4/92

(21) Anmeldenummer: 02029084.7

(22) Anmeldetag: **30.12.2002**

(84) Benannte Vertragsstaaten:
**AT BE BG CH CY CZ DE DK EE ES FI FR GB GR IE IT LI LU MC NL PT SE SI SK TR**
Benannte Erstreckungsstaaten:
**AL LT LV MK RO**

(71) Anmelder: **Umicore AG & Co. KG**
**63457 Hanau-Wolfgang (DE)**

(72) Erfinder:
• **Ruth, Karsten, Dr.**
  **63755 Alzenau (DE)**

• **Starz, Karl-Anton, Dr.**
  **63517 Rodenbach (DE)**
• **Schleunung, Andreas**
  **63762 Grossostheim (DE)**
• **Lopez, Marco, Dr.**
  **60433 Frankfurt (DE)**

(74) Vertreter: **VOSSIUS & PARTNER**
**Siebertstrasse 4**
**81675 München (DE)**

(54) **Katalysatorhaltiges Gasverteilersubstrat für Brennstoffzellen sowie Verfahren zu dessen Herstellung**

(57) Die Erfindung betrifft ein katalysatorhaltiges Gasverteilersubstrat für Brennstoffzellen, insbesondere Niedertemperatur-Brennstoffzellen, wie PEMFC und DMFC. Das Gasverteilersubstrat wird auf der Anodenseite der Brennstoffzelle eingesetzt und enthält Katalysatorkomponenten, die eine Entfernung von Kohlenmonoxid (in der PEMFC) beziehungsweise eine Oxidation von Methanol (in der DMFC) bewirken. Die Katalysatorkomponenten werden aus geeigneten Precursorverbindungen direkt im porösen Substratmaterial durch Temperaturbehandlung erzeugt und sind gleichmäßig über das gesamte Volumen des Gasverteilersubstrates verteilt. Die Katalysatorkomponenten weisen dadurch eine besonders hohe Aktivität auf. Weiterhin wird ein Verfahren zur Herstellung-eines katalysatorhaltigen Gasverteilersubstrates beschrieben.

Die Gasverteilersubstrate finden Verwendung in Membran-Elektroden-Einheiten (MEEs) für Niedertemperatur-Brennstoffzellen, insbesondere für PEM-Brennstoffzellen, die mit COhaltigem Reformatgas betrieben werden. Sie können weiterhin in Direkt-Methanol-Brennstoffzellen (DMFC) eingesetzt werden.

**Beschreibung**

Die Erfindung betrifft ein katalysatorhaltiges Gasverteilersubstrat für Brennstoffzellen, insbesondere Niedertemperatur-Brennstoffzellen (wie PEMFC oder DMFC), die ein ionenleitendes Polymer als Elektrolyt aufweisen. Das Gasverteilersubstrat wird auf der Anodenseite der Brennstoffzelle eingesetzt und enthält Katalysatorkomponenten, die beispielsweise Kohlenmonoxid (CO) entfernen bzw. Methanol oxidieren können. Weiterhin wird ein Verfahren zur Herstellung des katalysatorhaltigen Gasverteilersubstrates beschrieben. Das Produkt findet Verwendung in Membran-Elektroden-Einheiten (MEEs) für Niedertemperatur-Brennstoffzellen, beispielsweise PEM-Brennstoffzellen, die mit CO-haltigem Reformatgas betrieben werden. Sie können aber auch für Direkt-Methanol-Brennstoffzellen (DMFC) eingesetzt werden.

Brennstoffzellen wandeln einen Brennstoff und ein Oxidationsmittel örtlich voneinander getrennt an zwei Elektroden in Strom, Wärme und Wasser um. Als Brennstoff kann Wasserstoff, Methanol oder ein wasserstoffreiches Gas, als Oxidationsmittel Sauerstoff oder Luft dienen. Der Vorgang der Energieumwandlung in der Brennstoffzelle zeichnet sich durch eine große Schadstofffreiheit und einen besonders hohen Wirkungsgrad aus. Aus diesem Grunde gewinnen Brennstoffzellen zunehmend Bedeutung für alternative Antriebskonzepte, Hausenergieversorgungsanlagen sowie portable Anwendungen.

Die Membranbrennstoffzellen, beispielsweise die Polymerelektrolyt-Brennstoffzelle (englisch: PEMFC) und die Direkt-Methanol-Brennstoffzelle (englisch: DMFC), eignen sich aufgrund ihrer niedrigen Betriebstemperaturen, ihrer kompakten Bauweise und ihrer Leistungsdichte für viele mobile und stationäre Einsatzbereiche. Die Technologie der Brennstoffzellen ist in der Literatur ausführlich beschrieben, beispielsweise in K. Kordesch and G. Simader, "Fuel Cells and its Applications", VCH Verlag Chemie, Weinheim (Germany) 1996.

PEM-Brennstoffzellen sind in einer stapelweisen Anordnung ("Stack") aus vielen Brennstoffzelleneinheiten aufgebaut. Diese sind zur Erhöhung der Betriebsspannung elektrisch in Reihe geschaltet. Eine Brennstoffzelleneinheit enthält jeweils eine 5-lagige Membran-Elektrodeneinheit ("MEE"), die zwischen bipolaren Platten, auch als Separatorplatten bezeichnet, zur Gaszufuhr und Stromleitung angeordnet ist. Eine solche 5-lagige Membran-Elekrtrodeneinheit ist wiederum aus einer Polymerelektrolyt-Membran aufgebaut, welche auf beiden Seiten mit jeweils einer Elektrodenschicht versehen ist (3-lagige, beidseitig katalysatorbeschichtete Membran, engl. catalyst-coated membrane, CCM). Eine der Elektrodenschichten ist als Anode für die Oxidation von Wasserstoff und die zweite Elektrodenschicht als Kathode für die Reduktion von Sauerstoff ausgebildet. Die Polymerelektrolyt-Membran besteht aus Protonen leitenden Polymeren. Diese Materialien werden im folgenden auch kurz als Ionomere bezeichnet. Anode und Kathode der CCM enthalten Elektrokatalysatoren, die die jeweilige Reaktion (Oxidation von Wasserstoff beziehungsweise Reduktion von Sauerstoff) katalytisch unterstützen. Als katalytisch aktive Komponenten werden bevorzugt die Metalle der Platingruppe des Periodensystems der Elemente eingesetzt. In der Mehrzahl werden sogenannte Trägerkatalysatoren verwendet.

Auf den beiden Seiten der CCM werden dann sogenannte Gasverteilersubstrate (engl. gas diffusion layers, GDLs oder "backings") angebracht, so dass man damit zur 5-lagigen Membran-Elektrodeneinheit gelangt. Die Gasverteilersubstrate bestehen gewöhnlich aus Kohlefaserpapier oder Kohlefasergewebe und ermöglichen einen guten Zugang der Reaktionsgase zu den Reaktionsschichten und eine gute Ableitung des Zellenstroms und des sich bildenden Wassers.

Für den breiten kommerziellen Einsatz von PEM-Brennstoffzellen in Kraftfahrzeugen und Hausenergieversorgungsanlagen ist eine weitere Verbesserung der elektrochemischen Zellenleistung und Lebensdauer, insbesondere beim Einsatz von CO-haltigen-Reformatgasen notwendig.

Typische wasserstoffhaltige Brenngase, die durch Reformierung von Kohlenwasserstoffen wie Erdgas, Methan, Petroleum, Benzin oder Alkoholen erzeugt werden, enthalten je nach Reinigungsverfahren bis zu 2-3 Vol. % Kohlenmonoxid (CO). Die Kohlenmonoxidanteile wiederum vergiften den Pt- bzw. PtRu-Anodenkatalysator und führen damit zu einer Leistungseinbuße der gesamten PEM-Brennstoffzelle.

Es hat in der Vergangenheit nicht an Versuchen gefehlt, die Vergiftung der Anodenkatalysatoren durch CO zu beheben bzw. ihre Wirkung zu reduzieren. Hier gibt es umfangreiche Arbeiten zur Entwicklung von CO-toleranten Elektrokatalysatoren, vornehmlich auf der Basis von Platin/Ruthenium-Legierungen, die eine verbesserte Toleranz beim Betrieb mit CO-haltigen Brenngasen aufweisen (siehe beispielsweise US 6,007,934 und US 6,066,410). Aus der Literatur ist weiterhin das sog. "air-bleed"-Verfahren bekannt. Dabei werden zusätzlich ca. 1 bis 3 Vol. % Luft in den Anodenraum der Zelle geleitet, um das am Pt- oder PtRu-Elektrokatalysator adsorbierte CO zu $CO_2$ aufzuoxidieren und damit zu entfernen (siehe beispielsweise S. Gottesfeld und J. Pafford, J. Electrochem. Soc. 135, (1988), 139-146). Die Reaktion läuft in der Gasphase ab und lässt sich folgendermaßen darstellen:

$$CO + \tfrac{1}{2} O_2 \text{ (Luft)} ===> CO_2 \qquad\qquad (1)$$

Eine weitere Möglichkeit zur Entfernung von Kohlenmonoxid aus wasserstoffhaltigen Brenngasen ist die sog. Methanisierungsreaktion. An einem Katalysator wird das vorhandene CO mit Wasserstoff zu inertem Methan umgesetzt und so aus dem Gemisch entfernt:

$$CO + 3\,H_2 ===> CH_4 + H_2O \qquad\qquad (2)$$

Im Unterschied zur selektiven Oxidation nach Gl. (1) ist die Methanisierung von Kohlenmonoxid inhärent mit dem Verbrauch von Wasserstoff verbunden, benötigt jedoch keinen "air bleed" und damit keine externe Zuführung von Luft. Dies bedeutet weniger Regelaufwand. Während die Methode der CO-Entfernung durch Methanisierung noch relativ spärlich in der Literatur beschrieben wird, gibt es zahlreiche Vorschläge in der Patentliteratur, die sich damit befassen, einen gasphasenaktiven Katalysator zur CO-Oxidation in ein Gasverteilersubstrat einzubauen bzw. zu integrieren.

So wird beispielsweise in der EP 0 736 921 B1 eine Elektrode beschrieben, die zwei verschiedene katalytische Komponenten enthält. Die erste katalytische Komponente ist für Gasphasenreaktionsstellen aktiv, während die zweite katalytische Komponente an elektrochemischen Reaktionsstellen aktiv ist. Beide katalytische Komponenten werden als Doppelschicht ("bi-layer") auf das Gasverteilersubstrat aufgebracht und stehen miteinander in physikalischem Kontakt.

In der WO 00/36679 wird ein Gasverteilersubstrat ("backing") für eine PEM-Anode beschrieben, das nur auf der Seite, die der Ionomermembran abgewandt ist, einen gasphasenaktiven Katalysator zur Oxidation von CO besitzt. Gasphasenaktiver Katalysator und Elektrokatalysator sind beide als dünne Schichten ausgebildet und als solche nicht miteinander in direktem Kontakt.

In der EP 0 985 241 ist ein integraler PEM-Brennstoffzellenstapel beschrieben, der eine Anode besitzt, die als Dreischichtanode ausgebildet ist. Diese besitzt auf der Seite, die der Membran abgewandt ist eine CO-oxidationsselektive Katalysatorschicht und auf der Seite, die der Membran zugewandt ist, eine elektrochemisch aktive Schicht.

In der JP 9-129243 wird eine Niedertemperatur-(PEM)-Brennstoffzelle vorgeschlagen, die ebenfalls eine Gasdiffusionsschicht mit einem CO-Oxidationskatalysator enthält. Dabei wird der CO-Oxidationskatalysator in einer Mischung aus leitfähigem Material (z.B. Ruß) und wasserabstoßendem Material (z.B. PTFE) zu einem porösen Film verarbeitet und auf die Gasdiffusionsschicht aufgebracht.

Alle hier vorgeschlagenen Lösungsansätze weisen den Nachteil auf, dass der gasphasenaktive Katalysator nur in einer dünnen Schicht auf dem Gasverteilersubstrat ausgebildet ist. Aufgrund dieser dünnen Schichten wird die Verweilzeit des CO-haltigen Brenngases auf dem Katalysatormaterial reduziert. Dies führt zu einem nur teilweisen Umsatz und damit zu einer unvollständigen CO-Oxidation. Weiterhin werden die gasphasenaktiven Katalysatoren in Form von vorgefertigten Trägerkatalysatoren eingesetzt (beispielsweise Ru auf Ruß, Pt auf Aluminiumoxid) und dann in einem Gemisch mit Ruß, Teflon und ggf. weiteren Bestandteilen weiterverarbeitet. In vielen Fällen wird aktive Katalysatoroberfläche durch diese zusätzlichen Bestandteile blockiert. Damit erhält man keine optimale Ausnutzung der aktiven Katalysatoroberfläche, was wiederum dazu führt, dass letzte Reste an CO (z.B. Anteile unter 100 ppm) nicht entfernt werden. Dies bedeutet, dass weiterhin eine CO-Vergiftung der Elektrokatalysatoren auf der Anode des Brennstoffzellenstacks stattfindet.

Die oben beschriebenen Lösungsvorschläge führen weiterhin zu einer erheblichen Komplizierung der Brennstoffzelle, insbesondere des Gasverteiler- und Elektrodensystems. Es müssen zusätzliche Schichten auf die Gasverteilersubstrate aufgebracht werden, die letzlich eine Erhöhung der Produktionskosten der Produkte verursachen, weil sie zu einem komplexeren Fertigungsablauf führen.

Es ist daher eine Aufgabe der vorliegenden Erfindung, ein verbessertes katalysatorhaltiges Gasverteilersubstrat für Niedertemperatur-Brennstoffzellen bereitzustellen und ein geeignetes Herstellverfahren für ein solches Produkt zu finden.

Demgemäß betrifft die Erfindung ein katalysatorhaltiges Gasverteilersubstrat für Niedertemperatur-Brennstoffzellen enthaltend ein poröses Trägermaterial und Katalysatorpartikel, wobei die Katalysatorpartikel gleichmäßig über das gesamte Volumen des Gasverteilersubstrates verteilt sind. Vorteilhafte Ausführungsformen dieses Substrats sowie geeignete Herstellverfahren dafür sind in den nachfolgenden Ansprüchen beschrieben.

In vorteilhafter Weise wird bei dem erfindungsgemäßen katalysatorhaltigen Gasverteilersubstrat eine gute Ausnutzung des Katalysators bzw. der Katalysatoroberfläche und somit eine hohe Aktivität und Selektivität bei der Entfernung von Kohlenmonoxid (entweder durch CO-Oxidation oder durch Methanisierung) und bei der Oxidation von Methanol (in der DMFC) erzielt. Weiterhin zeichnet sich das erfindungsgemäße Verfahren zur Herstellung solcher Gasverteilersubstrate durch eine geringe Komplexität aus. Es ist praktisch und lässt sich leicht in einen kontinuierlichen Fertigungsablauf integrieren, wodurch die Herstellkosten gesenkt werden.

Das erfindungsgemäße katalysatorhaltige Gasverteilersubstrat enthält eine katalytisch aktive Komponente, die gleichmäßig über das gesamte Volumen des Gasverteilersubstrats verteilt ist. Es kann in einem Verfahren erzeugt werden, in dem Precursor wie wasserlösliche und/oder leicht zersetzbare Metallverbindungen, die zuvor in das betreffende Gasverteilersubstrat eingebracht worden sind, zersetzt bzw. pyrolisiert werden. Vorzugsweise werden dabei Edelmetallverbindungen verwendet. In einer bevorzugten Ausführungsform wird ein Gasverteilersubstrat mit einer wäßrigen Lösung eines Precursors (z.B. mit einer leicht zersetzbaren Metallverbindung) getränkt bzw. imprägniert. Dieser Tränkprozess kann durch einfaches Tauchen, durch Sprühen, Pinseln oder durch Imprägnieren erfolgen. Im einfachsten Fall wird das Gasverteilersubstrat in eine Wanne gelegt, die eine Lösung der Metallverbindung enthält, anschließend herausgenommen und getrocknet. Der Prozess wird so lange wiederholt, bis die notwendige Beladung des Substrates mit der katalytisch wirksamen Metallverbindung erreicht ist. Typischerweise werden Belegungsmengen in Flächenkonzentrationen von 0,05 bis 5 mg Metall/cm$^2$ durch ein bis zehn Wiederholungen erzielt. Es sind jedoch auch höhere Flächenkonzentrationen, bis etwa 100 mg/cm$^2$ erreichbar. Darüber hinaus ist es auch möglich, die Precursor-Lösung auf beide Seiten des Gasverteilersubstrates zu sprühen und anschließend zu trocknen. Arbeitet man im Siebdruckverfahren, so kann das Tränken bzw. Imprägnieren des Gasverteilersubstrates durch Siebdrucken einer dünnen Tinte erfolgen, deren Viskosität so eingestellt ist, dass sie das gesamte Substrat benetzt und durchdringt. Bei dem erfindungsgemäßen Gasverteilersubstrat ist die Katalysatorkomponente gleichmäßig im gesamten Volumen des Substrates verteilt und bevorzugt die katalytisch aktiven Partikel am Trägermaterial fixiert. So wird eine optimale Verteilung der Partikel im Substrat sowie eine sehr gute Zugänglichkeit der Reaktanten zu den katalytisch aktiven Stellen der Partikel gewährleistet.

Der Tränk- bzw. Imprägnierprozess kann in geeigneten Vorrichtungen kontinuierlich, beispielsweise von Rolle-zu-Rolle, durchgeführt werden. Dabei kann das Gasverteilersubstrat als endloses, flexibles Band eingesetzt werden und durch verschiedene Stationen, bestehend beispielsweise aus Hydrophobierung, Imprägnierung/Tränkung mit Precursorlösung, Trocknung, Beschichtung mit einer Ausgleichsschicht und Temperung, geführt werden. Die Imprägnierung bzw. Tränkung mit der Precursorverbindung kann damit leicht in einen kontinuierlichen Herstellprozess für Gasverteilersubstrate eingebaut werden. Sie verursacht damit geringe Zusatzkosten, führt aber gleichzeitig zu einem höherwertigen Produkt.

Die Temperung, die zur Zersetzung der Precursoren verwendet werden kann und bei der die Katalysatorpartikel gebildet werden, führt man in der Regel bei Temperaturen von 200 bis 900°C, vorzugsweise 200 bis 600°C durch. Sie kann unter Luftatmosphäre, aber auch unter Schutzgas (beispielsweise Stickstoff, Argon oder Mischungen davon) oder reduzierenden Gasen (beispielsweise Stickstoff/Wasserstoff-Mischungen oder Formiergas) vorgenommen werden. Es können dabei Band-Durchlauföfen, Muffelöfen, Kammeröfen sowie Kombinationen davon zum Einsatz kommen.

Als Katalysatoren für die CO-Oxidation nach Gl. (1) kommen vorzugsweise Ru-, PtRu- oder Pt-Legierungen mit Unedelmetallen in Betracht. Weiterhin können goldhaltige Katalysatoren wie beispielsweise Au, Au/Titanoxid oder Au/Eisenoxid verwendet werden. Auch können geträgerte silberhaltige Katalysatoren (beispielsweise Ag/Titanoxid) zum Einsatz kommen.

Zur Methanisierung von CO nach Gl. (2) eignen sich zum Beispiel Katalysatoren auf Basis von Nickel und/oder Ruthenium. Vorzugsweise sollten die Betriebstemperaturen der Zelle beim Einsatz von Gasverteilersubstraten mit Methanisierungskatalysator etwas über den normalen Temperaturen der PEM-Brennstoffzelle liegen. Bei Betriebstemperaturen von über 90°C wird nämlich eine Erhöhung der Methanisierungsaktivität des Katalysators erzielt und gleichzeitig die CO-Vergiftung des Pt-haltigen Anodenkatalysators zurückgedrängt.

Als Precursoren für die katalytisch aktiven Komponenten kommen wasserlösliche, leicht zersetzbare Metallverbindungen, vorzugsweise Verbindungen aus der Gruppe der Amminnitrate, Nitrate, Carbonate, Carboxylate, Hydoxycarboxylate, Acetate, Lactate, Butanoate, Oxalate, Formiate, Octanoate, oder Ethylhexanoate zum Einsatz, die bei der Zersetzung die gewünschten Katalysatorpartikel bilden. Bevorzugte Katalysatorpartikel umfassen Metalle, insbesondere Edelmetalle wie bspw. Pt, Pd, Ru, Rh, Au, Ag, Ir, Os, und/oder deren Oxide, und/oder deren Mischungen beziehungsweise Legierungen mit Nichtedelmetallen, aber auch Unedelmetalle wie Ti, Fe, Co, Mn, Cr oder Ni. Aus Korrosionsgründen vermeidet man nach Möglichkeit halogen- bzw. chlorhaltige Precursoren. Jedoch können zum Beispiel auch metallorganische Komplexe der Metalle, sog. Resinate, eingesetzt werden.

Beispiele für geeignete Edelmetallverbindungen sind die Pt-Precursoren Platin(II)-nitrat, Platin(II)-lactat, Platin(II)ammin-nitrat, Ethylammonium-platinhexahydrat, Platinacetat etc. Beispiele für geeignete Ru-Precursoren sind Ruthenium(III)-nitrosylnitrat oder Ruthenium(III)-acetat. Beispiele für Au-haltige Precursoren sind Goldresinate wie z. B Au-Polymerester (Fa. FERRO GmbH, Frankfurt) oder goldhaltige Komplexsalze. Analoge Komplexe der anderen Edelmetalle können selbstverständlich auch verwendet werden.

Precursoren für Unedelmetalle, die allein oder in Kombination mit den Edelmetallprecursoren verwendet werden können, sind beispielsweise Kobalt(II)-nitrat, Mangan(II)-oxalat, Chrom(III)-nitrat, Nickel(II)-nitrat, Eisen(II)-carbonat und vergleichbare Verbindungen anderer Elemente wie der oben aufgeführten Unedelmetalle. Auch hierbei werden halogenhaltige Precursoren aus Korrosionsgründen vermieden.

Weiterhin können den beschriebenen Edelmetall- und Unedelmetall-Precursoren zusätzliche Komponenten beigefügt werden, die als Co-Katalysatoren, als Trägermaterialien oder als Vorstufen davon fungieren. Beispiele hierfür sind hochoberflächige Edelmetallmohre, feine Metallpulver, Ruße, pyrogene Oxide wie beispielsweise Kieselsäure ("Aerosil" der Fa. Degussa), pyrogene Titanoxide und vergleichbare Materialien. Auch andere anorganische Komponenten, die sich bei Pyrolyse bzw. Temperaturbehandlung in oxidische Materialien umwandeln, können eingesetzt werden Beispiele hierfür sind organische Silizium-Ester. Organosilane, Organotitanate, Organostannate, Aluminate, Borate und ähnliche Verbindungen.

Die Precusorverbindungen werden zu einer Zubereitung verarbeitet, die für das jeweilige Auftragsverfahren auf das Gasverteilersubstrat geeignet ist. Für den Auftrag im Tauch- bzw. Tränkverfahren wird eine entsprechend niedrigviskose Lösung hergestellt. Diese kann zur Verbesserung der Verarbeitungseigenschaften Hilfsmittel wie Tenside, Netzmittel, Bindemittel, Verdickungsmittel, Anti-Absetzmittel oder organische Lösungsmittel enthalten. Für den Auftrag durch Pinseln oder durch Siebdruck wird die Viskosität der Lösungen entsprechend modifiziert, Mittel und Wege hierzu sind dem Fachmann bekannt.

Als Ausgangsmaterialien zur Herstellung des erfindungsgemäßen katalysatorhaltigen Gasverteilersubstrates können kommerzielle Kohlefasersubstrate verwendet werden. Es werden häufig poröse Kohlefasersubstrate (Kohlefaserpapiere oder Kohlefasergewebe) mit einer Schichtdicke von 100 bis 400 µm eingesetzt. Diese Materialien haben üblicherweise eine Porosität von 60 bis 90 % und mittlere Porendurchmesser von 20 bis 50µm. Es gibt verschiedene Substratmaterialien, die sich in Struktur, Herstellungsverfahren und Eigenschaften unterscheiden. Beispiele für solche poröse Materialien sind Toray-Papier, Kohlefaservliese von SGL (Typ Sigracet) oder gewebte Kohlefasergebilde der Firma Textron (Typ AvCarb). Viele dieser Materialien sind als Blatt- oder auch als Rollenware erhältlich. Des weiteren sind als Ausgangsmaterial für Gasverteilersubstrate auch Metallgewebe, feine Metallnetze, leitfähig beschichtete Kunststoffgewebe, leitfähig beschichtete Textilgewebe, beschichtete Glasfasern und ähnliche Materialien einsetzbar. Grundsätzlich können die Gasverteilersubstrate vorher hydrophobiert, hydrophiliert, gepresst, gewalzt oder auf sonstige Art behandelt sein, bevor sie mit der Precursorlösung behandelt werden.

Das erfindungsgemäße katalysatorhaltige Gasverteilersubstrat kann mit oder ohne Ausgleichschicht ausgerüstet sein. Als Ausgleichsschicht (sog. "Microlayer") wird im Rahmen dieser Erfindung eine Schicht auf derjenigen Seite des Gasverteilersubstrates verstanden, die in der Brennstoffzelle mit der Elektrodenschicht in Kontakt steht. Die Ausgleichsschicht enthält in der Regel eine Mischung aus einem hydrophoben Polymeren wie beispielsweise PTFE und feinteiligen Rußen. Die Ausgleichsschicht wird üblicherweise durch Siebdruckverfahren aufgebracht, ihre Dicke beträgt beispielsweise von 5 bis 100 µm.

Eine komplette Membran-Elektrodeneinheit ("MEE") einer PEM- oder DMFC-Brennstoffzelle enthält eine katalysatorbeschichtete Polymerelektrolyt-Membran ("CCM") mit beidseitig angebrachten Gasverteilersubstraten. Vorzugsweise wird das erfindungsgemäße Gasverteilersubstrat auf der Anodenseite der Membran-Elektrodeneinheit eingesetzt. Die damit hergestellten Membran-Elektroden-Einheiten sind aufgrund der verbesserten Toleranz gegenüber Kohlenmonoxid für den Einsatz von CO-haltigen Wasserstoffgemischen als Brenngas verwendbar. Solche Brenngase werden häufig durch Reformierung von Kohlenwasserstoffen wie Erdgas, Methan oder Benzin hergestellt und kommen bei der stationären Verwendung der Brennstoffzelle zum Einsatz.

Jedoch kann das erfindungsgemäße katalysatorhaltige Gasverteilersubstrat auch in MEEs für Direktmethanol-Brennstoffzellen (DMFC) eingesetzt werden. Es bewirkt dabei beispielsweise auf der Anodenseite eine bessere Oxidation des Methanols und trägt zur Leistungsverbesserung der DMFC-Zelle bei.

Die folgenden Figuren zeigen Ausführungsformen der Erfindung.

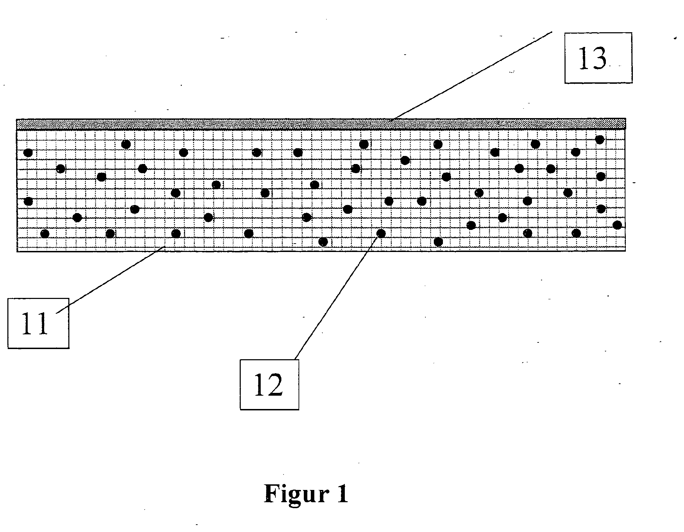

**Figur 1:** Schematische Darstellung des erfindungsgemäßen katälysatorhaltigen Gasverteilersubstrates mit Ausgleichsschicht

Figur 1 zeigt einen schematischen Querschnitt durch ein erfindungsgemäßes katalysatorhaltiges Gasverteilersubstrat. Dabei bezeichnet (11) das poröse Substratmaterial. Die Katalysatorpartikel (12) sind an der Oberfläche des Substrates fixiert und gleichmäßig über das gesamte Volumen des Substrates verteilt. Sie besitzen damit eine optimale Zugänglichkeit, beispielsweise für ein durch CO verunreinigtes Brenngas. Eine optionale Ausgleichsschicht (13), die beispielsweise aus PTFE und Ruß besteht, ist aufgebracht, um den Kontakt zur Elektrodenschicht auf der Ionomermembran zu verbessern.

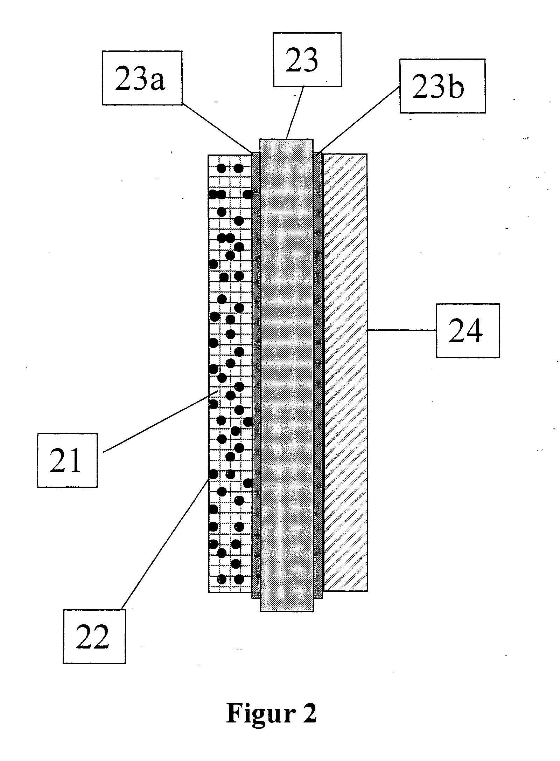

**Figur 2:** Komplette 5-lagige Membran-Elektroden-Einheit mit erfindungsgemäßem katalysatorhaltigen Gasverteilersubstrat auf der Anodenseite.

Figur 2 zeigt einen schematischen Querschnitt durch eine komplette 5-lagige MEE mit erfindungsgemäßem Gasverteilersubstrat (21) enthaltend Katalysatorpartikel (22) auf der Anodenseite. Das Gasverteilersubstrat (21) ist in Kontakt mit einer dreilagigen katalysatorbeschichteten Ionomermembran, bestehend aus Anodenkatalysatorschicht (23a), Ionomermembran (23) und Kathodenkatalysatorschicht (23b). Auf der Kathodenseite ist ein nicht katalysiertes Gasverteilersubstrat (24) angebracht. In dieser Ausführungsform tragen die beiden Gasverteilersubstrate keine Ausgleichsschicht.

Die nachfolgenden Beispiele sollen die Erfindung näher erläutern. Die Erfindung ist jedoch nicht auf die darin beschriebenen Ausführungsformen beschränkt.

## Beispiele

### Beispiel 1:

Es wird die Herstellung eines Ru-haltigen Gasverteilersubstrates mit Ausgleichsschicht beschrieben. Als Ausgangsmaterial dient ein hydrophobiertes Kohlefaserpapier der Fläche 50 cm$^2$ (Abmessungen ca. 7x7 cm) mit einer Dicke von 200 µm (Sigracet 10, Fa. SGL Carbon). Der Teflon-Gehalt beträgt ca. 8 Gew.-%. Nach der Gewichtsermittlung mittels einer Laborwaage wird das Substrat in eine große Schale mit Ruthenium(III)acetat-Lösung (5 Gew.-% Ru in Wasser, Fa. OMG, Hanau) getaucht. Nach der vollständigen Benetzung nimmt man das Substrat mit einer Pinzette aus dem Tauchbad. Man lässt es für eine kurze Zeit abtropfen und trocknet anschließend im Trockenschrank bei 100°C für 15 min. Dann lässt man abkühlen und ermittelt die aufgenommenen Menge an Ru-Acetat gravimetrisch. Der Tauchvorgang wird dreimal wiederholt, bis eine Beladung von 0,85 mg Ru-Acetat/cm$^2$ erhalten wird. Anschließend tempert man das Gasverteilersubstrat für 30 min in einem Ofen bei 200°C unter Formiergas (95 Vol.-% Stickstoff, 5 Vol.-% Wasserstoff). Nach dem Abkühlen des Substrates beträgt der Ru-Gehalt des Substrates 0,48 mg Ru/cm$^2$. Die Ru-Partikel sind gleichmäßig im Substrat verteilt und an der Substratoberfläche fixiert. Sie weisen eine mittlere Partikelgröße von 5 nm auf, gemessen mittels Transmissions-Elektronen-Spektrokopie (TEM).

Sodann wird im Siebdruckverfahren eine Ausgleichsschicht aus Ruß/PFTE aufgebracht, getrocknet und bei 390°C für 10 min getempert. Die Schichtdicke der Ausgleichschicht beträgt ca. 20 µm.

Das Substrat wird als Voranode mit einer katalysatorbeschichteten Membran (CCM) kombiniert und zu einer Membran-Elektrodeneinheit (MEE) zusammengefügt. Als CCM kommt eine katalysatorbeschichtete Membran des Typs 6 C zum Einsatz (Beladung Anode 0,2 mg Pt/cm$^2$; Beladung Kathode 0,4 mg Pt/cm$^2$; Membran EW 1100 mit 50 micron Dicke, Fa. OMG, Hanau). Auf der Kathodenseite wird ein hydrophobiertes Kohlefaserpapier mit Ausgleichschicht (Standard, Fa. SGL, Typ Sigracet 10) eingesetzt.

Die MEE wird in einer PEM-Brennstoffzelle im Wasserstoff/Luft- sowie im Reformat/Luft-Betrieb getestet und weist vor allem im Reformat/Luft-Betrieb bei einem Gehalt von 100 ppm CO sehr gute Ergebnisse auf (s. Tabelle 1). Im Vergleich zum katalysatorfreien Gasverteilersubstrat (Vergleichsbeispiel VB1) ist die Toleranz gegenüber CO deutlich verbessert. Dies zeigt, dass das erfindungsgemäße katalysatorhaltige Gasverteilersubstrat eine sehr gute Wirksamkeit besitzt.

### Beispiel 2:

Es wird die Herstellung eines Ru-haltigen Gasverteilersubstrates ohne Ausgleichsschicht beschrieben. Als Ausgangsmaterial dient wiederum ein hydrophobiertes Kohlefaserpapier der Fläche 50 cm$^2$ (Abmessungen ca. 7x7 cm) mit einer Dicke von 200 µm (Sigracet 10, Fa. SGL Carbon). Der Teflon-Gehalt beträgt ca. 8 Gew.-%. Die Imprägnierung mit Precursorlösung erfolgt wie im Beispiel 1 beschrieben. Der Tauchvorgang wird zweimal wiederholt, bis eine Beladung von 0,5 mg Ru-Acetat/cm$^2$ erhalten wird. Anschließend tempert man das Gasverteilersubstrat für 30 min in einem Ofen bei 250 °C unter Formiergas (95 Vol.-% Stickstoff, 5 Vol.-% Wasserstoff). Nach dem Abkühlen des Substrates beträgt der Ru-Gehalt des Substrates 0,28 mg Ru/cm$^2$. Die Ru-Partikel sind gleichmäßig im Substrat verteilt und an der Substratoberfläche fixiert. Sie weisen eine mittlere Partikelgröße von 4 nm (gemessen mit TEM) auf. Das Substrat wird als Voranode mit einer katalysatorbeschichteten Membran (CCM) kombiniert und, wie in Beispiel 1 beschrieben, zu einer Membran-Elektrodeneinheit (MEE) zusammengefügt. Beim Betrieb der MEE mit CO-haltigem Reformat (100 ppm CO) erhält man sehr gute Ergebnisse und im Vergleich zu Vergleichsbeispiel VB1 (siehe unten) eine deutlich verbesserte CO-Toleranz.

### Beispiel 3:

Dieses Beispiel beschreibt die Herstellung eines Au/TiO$_2$-haltigen Gasverteilersubstrates ohne Ausgleichsschicht. Als Ausgangsmaterial dient wiederum ein hydrophobiertes Kohlefaserpapier der Fläche 50 cm$^2$ (Abmessungen ca. 7x7 cm) mit einer Dicke von 200 µm (Sigracet 10, Fa. SGL Carbon). Der Teflon-Gehalt beträgt ca. 8 Gew.-%. Es wird eine wasserhaltige Precursorlösung hergestellt enthaltend Au-Polymerester HF 3401 (Fa. FERRO, Frankfurt) und Titanoxid (Typ P25, Fa. Degussa, Frankfurt). Der Au-Gehalt der Lösung beträgt 5 Gew.-% Au, der Anteil an Titanoxid liegt bei 0,1 Gew.-%. Die Tränkung erfolgt wie im Beispiel 1 beschrieben. Der Tauchvorgang wird dreimal wiederholt. Anschließend tempert man das Gasverteilersubstrat für 30 min in einem Ofen bei 250°C unter Formiergas. Nach dem Abkühlen des Substrates beträgt der Au-Gehalt des Substrates ca. 0,1 mg Au/cm$^2$. Die Au-Partikel sind im Verbund mit dem Titanoxid gleichmäßig im Substrat verteilt. Das Substrat wird, wie in Beispiel 1 beschrieben, als Voranode mit einer katalysatorbeschichteten Membran (CCM) kombiniert und zu einer Membran-Elektrodeneinheiten (MEE) zusammengefügt.

Beim Betrieb der MEE mit CO-haltigem Reformat (100 ppm CO) erhält man sehr gute Ergebnisse und im Vergleich zu VB1 eine deutlich verbesserte CO-Toleranz.

### Vergleichsbeispiel (VB-1)

In diesem nicht erfindungsgemäßen Beispiel wird die Herstellung und Prüfung einer MEE mit einem katalysatorfreien Gasverteilersubstrat ohne Ausgleichsschicht auf der Anodenseite beschrieben. Als Ausgangsmaterial dient wiederum ein hydrophobiertes Kohlefaserpapier der Fläche 50 cm$^2$ (Abmessungen ca. 7x7 cm) mit einer Dicke von 200 µm (Sigracet 10, Fa. SGL Carbon). Der Teflon-Gehalt beträgt ca. 8 Gew.-%. Das katalysatorfreie Substrat wird mit einer katalysatorbeschichteten Membran (CCM) kombiniert und, wie in den Beispielen 1 und 2 beschrieben, zu einer Membran-Elektrodeneinheiten (MEE) zusammengefügt. Beim Betrieb der MEE mit CO-haltigem Reformat (100 ppm CO) erhält man aufgrund der CO-Vergiftung des Pt-Katalysators sehr schlechte Ergebnisse. Dies zeigt, dass die erfindungsgemäßen katalysatorhaltigen Gasverteilersubstrate (mit oder ohne Ausgleichsschicht) eine sehr gute Wirksamkeit besitzen.

### Beispiel 4:

Es wird die Herstellung eines PtRu-haltigen Gasverteilersubstrates ohne Ausgleichsschicht und dessen Verwendung als Voranode in einer Direkt-Methanol-Brennstoffzelle (DMFC) beschrieben.

Als Ausgangsmaterial dient wiederum ein hydrophobiertes Kohlefaserpapier der Fläche 50 cm$^2$ (Abmessungen ca. 7x7 cm) mit einer Dicke von 200 µm (Sigracet 10, Fa. SGL Carbon). Der Teflon-Gehalt beträgt ca. 8 Gew.-%. Nach der Gewichtsermittlung mittels einer Laborwaage wird das Substrat in eine große Schale mit 6 Teilen Ruthenium(III)-acetat-Lösung (5 Gew. % Ru in Wasser, Fa. OMG, Hanau) und 1 Teil Platin(II)-nitrat (16 Gew. % Pt, Fa. OMG. Hanau) getaucht. Nach der vollständigen Benetzung wird das Substrat mit einer Pinzette aus dem Tauchbad genommen. Man läßt es für eine kurze Zeit abtropfen und trocknet anschließend im Trochenschrank bei 100°C für 15 min. Dann läßt man abkühlen und ermittelt die aufgenommenen Menge an Ru-Acetat und Pt-Nitrat gravimetrisch. Anschließend tempert man das Gasverteilersubstrat für 30 min in einem Ofen bei 250°C unter Formiergas (95 Vol.-% Stickstoff, 5 Vol.-% Wasserstoff). Nach dem Abkühlen des Substrates beträgt der Ru-Gehalt des Substrates ca. 0,65 mg Ru/cm$^2$ und der Platingehalt ca. 0, 35 mg Pt/cm$^2$. Die Pt- und Ru-Partikel sind gleichmäßig über das gesamte Volumen des Substrates verteilt. Das Substrat wird als Voranode mit einer katalysatorbeschichteten Membran (CCM, Typ R221, Anodenbeladung 0,3 mg Pt/cm$^2$ und 0,15 mg Ru/cm$^2$, Kathodenbeladung 0,4 mg Pt/cm$^2$; Fa. OMG, Hanau) kombiniert und, wie in Beispiel 1 beschrieben, zu einer Membran-Elektrodeneinheiten (MEE) zusammengefügt. Diese wird in eine Direkt-Methanol-Brennstoffzelle (DMFC) mit einer aktiven Zellfläche von 50 cm$^2$ eingebaut. Zur Messung wird eine 2-molare Methanol/Wasser-Lösung verwendet, die Zelltemperatur beträgt 60 °C. Auf der Kathodenseite wird Luft im drucklosen Betrieb zugeführt. Man erhält eine eine sehr Leistungsdichte (peak power density) von über 80 mW/cm$^2$.

### Elektrochemische Tests

Bei den PEMFC-Leistungstests wird als Anodengas eine Brenngas-Mischung aus 60 Vol.-% H$_2$, 15 Vol.-% N$_2$ und 25 Vol.-% CO$_2$ verwendet. Dem Brenngas wird 100 ppm CO mit einem "airbleed" von 1 Vol.-% bzw. 3 Vol.-% Luft zugesetzt. Diese Brenngas-Mischung simuliert ein Reformatgas, welches durch Reformieren von Methan oder Kohlenwasserstoffen mittels Dampfreformierung und nachfolgender Reinigungsstufen erhalten werden kann. Als Kathodengas wird Luft verwendet. Die Zelltemperatur beträgt 75 °C. Der Druck der Arbeitsgase ist 3 bar (absolut). Die Stöchiometrie der Gase ist 1,5 (Anodengas) und 2,0 (Kathodengas). Die MEEs werden in einer Zelle mit 50 cm$^2$ aktiver Fläche nach OMG-Standardbedingungen vermessen. Die Ergebnisse für Beispiele 1, 2 und 3 sowie für das Vergleichsbeispiel VB 1 sind in der **Tabelle 1** zusammengefasst.

Tabelle 1:

| Elektrochemische Tests in der PEM-Brennstoffzelle (Zellspannung bei einer Stromdichte von 500 mA/cm$^2$) | | | | |
|---|---|---|---|---|
| **Brenngaszusammensetzung** | **Beispiel 1** | **Beispiel 2** | **Beispiel 3** | **VB1** |
| 100 Vol.-% H$_2$ | 758 mV | 751 mV | 750 mV | 750 mV |

Tabelle 1: (fortgesetzt)

| Elektrochemische Tests in der PEM-Brennstoffzelle (Zellspannung bei einer Stromdichte von 500 mA/cm$^2$) | | | | |
|---|---|---|---|---|
| **Brenngaszusammensetzung** | **Beispiel 1** | **Beispiel 2** | **Beispiel 3** | **VB1** |
| .60 Vol.-% $H_2$, 25 Vol.-% $CO_2$, 15 Vol.-% $N_2$ | 726 mV | 724 mV | 725 mV | 722 mV |
| 60 Vol.-% $H_2$, 25 Vol.-% $CO_2$, 15 Vol.-% $N_2$ + 100 ppm CO, + 3 Vol.-% air bleed | 664 mV | 592 mV | 550 mV | Nicht messbar |
| 60 Vol.-% $H_2$, 25 Vol.-% $CO_2$, 15 Vol.-% $N_2$) + 100 ppm CO, + 1 Vol.-% air bleed | 432 mV | 402 mV | 525 mV | Nicht messbar |

**Patentansprüche**

1. Katalysatorhaltiges Gasverteilersubstrat für eine Brennstoffzelle, enthaltend ein poröses Trägermaterial und Katalysatorpartikel, wobei die Katalysatorpartikel gleichmäßig über das gesamte Volumen des Gasverteilersubstrates verteilt sind.

2. Katalysatorhaltiges Gasverteilersubstrat nach Anspruch 1, wobei die Katalysatorpartikel an der Oberfläche des porösen Trägermaterials fixiert sind.

3. Katalysatorhaltiges Gasverteilersubstrat nach Anspruch 1 oder 2, wobei die Katalysatorpartikel eine mittlere Partikelgröße von 1 bis 100 nm aufweisen.

4. Katalysatorhaltiges Gasverteilersubstrat nach einem der vorstehenden Ansprüche, wobei die Katalysatorpartikel Edelmetalle der Gruppe Pt, Pd, Ru, Rh, Au, Ag, Ir, Os, und/oder deren Oxide, und/oder deren Mischungen beziehungsweise Legierungen mit Nichtedelmetallen umfassen.

5. Katalysatorhaltiges Gasverteilersubstrat nach einem der vorstehenden Ansprüche, wobei die Katalysatorpartikel in einer Flächenkonzentration von 0,01 bis 100 mg Metall/cm$^2$ auf dem Gasverteilersubstrat vorliegen.

6. Katalysatorhaltiges Gasverteilersubstrat nach einem der vorstehenden Ansprüche, wobei das poröse Trägermaterial aus Kohlefasergewebe, Kohlefaservlies, Kohlepapier, Kohlefasernetzen, leitfähig beschichteten Kunststoffnetzen, leitfähig beschichteten Polymergeweben, leitfähig beschichteten Glasfasern, leitfähig beschichteten Schäumen oder Metallfasergeweben oder Metalldrahtnetzen umfasst.

7. Katalysatorhaltiges Gasverteilersubstrat nach einem der vorstehenden Ansprüche, wobei die Katalysatorpartikel gasphasenaktiv sind und zur Oxidation von Kohlenmonoxid geeignet sind.

8. Katalysatorhaltiges Gasverteilersubstrat nach einem der vorstehenden Ansprüche, wobei die Katalysatorpartikel gasphasenaktiv sind und zur Umsetzung von Kohlenmonoxid zu Methan geeignet sind.

9. Katalysatorhaltiges Gasverteilersubstrat nach einem der vorstehenden Ansprüche, wobei die Katalysatorpartikel zur Oxidation von Methanol geeignet sind.

10. Verfahren zur Herstellung eines katalysatorhaltigen Gasverteilersubstrates nach den Ansprüchen 1 bis 9, wobei die Katalysatorpartikel auf dem porösen Trägermaterial durch thermische Zersetzung von mindestens einer Precursorverbindung gebildet werden.

11. Verfahren zur Herstellung eines katalysatorhaltigen Gasverteilersubstrates nach Anspruch 10, wobei das poröse Trägermaterial mit mindestens einer Precursorverbindung behandelt wird, getrocknet wird und getempert wird, wobei eine Zersetzung der Precursorverbindung eintritt und die Katalysatorpartikel gebildet und auf der Oberfläche des Trägermaterials fixiert werden.

12. Verfahren zur Herstellung eines katalysatorhaltigen Gasverteilersubstrates nach Anspruch 10 oder 11, wobei als Precursorverbindungen thermisch zersetzbare Metallverbindungen eingesetzt werden.

**13.** Verfahren zur Herstellung eines katalysatorhaltigen Gasverteilersubstrates nach einem der Ansprüche 10 bis 12, wobei als Precursorverbindung eine oder mehrere Metallverbindungen aus der Gruppe der Nitrate, Carbonate, Carboxylate, Hydroxycarboxylate, Acetate, Lactate, Butanoate, Oxalate, Formiate, Resinate oder Ethylhexanoate eingesetzt werden.

**14.** Verfahren zur Herstellung eines katalysatorhaltigen Gasverteilersubstrates nach einem der Ansprüche 10 bis 13, wobei die Temperung bei einer Temperatur von 200 bis 900°C durchgeführt wird.

**15.** Verfahren zur Herstellung eines katalysatorhaltigen Gasverteilersubstrates nach einem der Ansprüche 10 bis 14, wobei die Temperung unter gasförmiger Atmosphäre, vorzugsweise unter Luft, Stickstoff, Wasserstoff oder Mischungen davon, durchgeführt wird.

**16.** Verfahren zur Herstellung eines katalysatorhaltigen Gasverteilersubstrates nach Anspruch 10, wobei die Herstellung in einem kontinuierlichen Verfahren erfolgt.

**17.** Verwendung eines katalysatorhaltigen Gasverteilersubstrats nach einem der Ansprüche 1 bis 9 in Brennstoffzellen zur Entfernung von Kohlenmonoxid aus wasserstoffhaltigen Brenngasen.

**18.** Verwendung eines katalysatorhaltigen Gasverteilersubstrats nach einem der Ansprüche 1 bis 9 in Direkt-Methanol-Brennstoffzellen zur Oxidation von Methanol.

**19.** Membran-Elektroden-Einheit für eine Niedertemperatur-Brennstoffzelle, enthaltend ein katalysatorhaltiges Gasverteilersubstrat nach einem der Ansprüche 1 bis 9.

**Figur 1**

**Figur 2**

**Europäisches Patentamt**

# EUROPÄISCHER RECHERCHENBERICHT

Nummer der Anmeldung

EP 02 02 9084

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 00 79628 A (HOOGERS GREGOR ;BALL SARAH CAROLINE (GB); HARDS GRAHAM ALAN (GB);) 28. Dezember 2000 (2000-12-28) * Seite 3, Zeile 27 - Seite 4, Zeile 15; Ansprüche 1-7,9,11-13; Beispiele; Tabelle 1 * | 1,2,4-7, 17-19 | H01M8/10 H01M4/92 |
| X | EP 0 606 051 A (PERMELEC SPA NORA ;PERMELEC ELECTRODE LTD (JP)) 13. Juli 1994 (1994-07-13) * Ansprüche 1,2,5,13,14,16,17; Beispiele * | 1,2,4,6 | |
| X | US 6 361 896 B1 (ROHLAND BERND ET AL) 26. März 2002 (2002-03-26) * Spalte 3, Zeile 13 - Spalte 3, Zeile 43; Abbildung 1 * * Spalte 4, Zeile 12 - Spalte 4, Zeile 25; Ansprüche 1,2 * | 1,2,4,6, 7,17,19 | |
| X | DE 197 57 320 A (KERNFORSCHUNGSANLAGE JUELICH) 1. Juli 1999 (1999-07-01) * Spalte 2, Zeile 43 - Spalte 2, Zeile 62; Ansprüche 1-6 * | 1-4,6 | RECHERCHIERTE SACHGEBIETE (Int.Cl.7) H01M |
| X | US 4 828 941 A (STERZEL HANS-JOSEF) 9. Mai 1989 (1989-05-09) * Spalte 9, Zeile 20 - Spalte 10, Zeile 67; Ansprüche 1,2,6,7; Abbildung * | 1,2,4-6, 18,19 | |
| D,A | JP 09 129243 A (TOYOTA CENTRAL RES &AMP;DEV LAB INC) 16. Mai 1997 (1997-05-16) * Zusammenfassung * | 1-19 | |
| A | EP 1 150 370 A (DMC2 DEGUSSA METALS CATALYSTS) 31. Oktober 2001 (2001-10-31) * Ansprüche * | 1-19 | |

Der vorliegende Recherchenbericht wurde für alle Patentansprüche erstellt

| Recherchenort | Abschlußdatum der Recherche | Prüfer |
|---|---|---|
| MÜNCHEN | 28. August 2003 | Wiedemann, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**EP 1 435 672 A1**

**ANHANG ZUM EUROPÄISCHEN RECHERCHENBERICHT
ÜBER DIE EUROPÄISCHE PATENTANMELDUNG NR.**          EP 02 02 9084

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-08-2003

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| WO 0079628 | A | | 28-12-2000 | CA | 2374238 | A1 | 28-12-2000 |
| | | | | EP | 1192681 | A1 | 03-04-2002 |
| | | | | WO | 0079628 | A1 | 28-12-2000 |
| | | | | JP | 2003502827 | T | 21-01-2003 |
| EP 0606051 | A | | 13-07-1994 | JP | 3142410 | B2 | 07-03-2001 |
| | | | | JP | 6235083 | A | 23-08-1994 |
| | | | | JP | 3236686 | B2 | 10-12-2001 |
| | | | | JP | 6192873 | A | 12-07-1994 |
| | | | | CA | 2111882 | A1 | 26-06-1994 |
| | | | | EP | 0606051 | A1 | 13-07-1994 |
| | | | | FI | 935774 | A | 26-06-1994 |
| | | | | NO | 934754 | A | 27-06-1994 |
| US 6361896 | B1 | | 26-03-2002 | DE | 19615562 | C1 | 09-10-1997 |
| | | | | DE | 59710284 | D1 | 17-07-2003 |
| | | | | WO | 9740542 | A1 | 30-10-1997 |
| | | | | EP | 0958629 | A1 | 24-11-1999 |
| | | | | JP | 2001502105 | T | 13-02-2001 |
| DE 19757320 | A | | 01-07-1999 | DE | 19757320 | A1 | 01-07-1999 |
| US 4828941 | A | | 09-05-1989 | DE | 3618840 | A1 | 10-12-1987 |
| | | | | EP | 0248394 | A2 | 09-12-1987 |
| | | | | JP | 62296372 | A | 23-12-1987 |
| JP 09129243 | A | | 16-05-1997 | KEINE | | | |
| EP 1150370 | A | | 31-10-2001 | EP | 1150369 | A1 | 31-10-2001 |
| | | | | EP | 1150370 | A2 | 31-10-2001 |
| | | | | AT | 244458 | T | 15-07-2003 |
| | | | | BR | 0101612 | A | 27-11-2001 |
| | | | | CA | 2345219 | A1 | 28-10-2001 |
| | | | | DE | 50002722 | D1 | 07-08-2003 |
| | | | | JP | 2002117865 | A | 19-04-2002 |
| | | | | US | 2002041992 | A1 | 11-04-2002 |

EPO FORM P0461

Für nähere Einzelheiten zu diesem Anhang : siehe Amtsblatt des Europäischen Patentamts, Nr.12/82